# EUROPÄISCHE PATENTANMELDUNG

(11) **EP 4 807 984 A1**
(43) Veröffentlichungstag der Anmeldung: **16.09.2026**
(21) Anmeldenummer: 26155232.7
(22) Anmeldetag: 30.01.2026
(51) Int. Cl.: H02P 29/024

(54) **BESTIMMEN EINES WEITERDREHMOMENTS EINES MINDESTENS DREIPHASIGEN BÜRSTENLOSEN MOTORS**

(30) Priorität: 11.03.2025 LU 600523
(71) Anmelder: Miele & Cie. KG, 33332 Gütersloh (DE)
(72) Erfinder: Femmer, Uwe, 33330 Gütersloh (DE); Schaefer-van den Boom, Klaus, 53489 Sinzig (DE)

(57) **Zusammenfassung**

Verfahren zum Bestimmen eines Weiterdrehmoments eines mindestens dreiphasigen bürstenlosen Motors (M), vorzugsweise ohne Rotorlagesensor, mit wenigstens den Schritten:
a) geregeltes Bestromen einer ersten Phase (U), wobei die Phasenspannung (U_PhaseU) des Bestromens vorzugsweise mittels PWM-Steuerung eingestellt wird,
Bestimmen der Differenz der Ströme der zweiten und dritten Phase (V, W),
Erkennen einer Bewegung des Rotors, falls die Differenz einen Schwellenwert überschreitet,

b) geregeltes Bestromen einer zweiten Phase (V), wobei die Phasenspannung (U_PhaseV) des Bestromens vorzugsweise mittels PWM-Steuerung eingestellt wird,
Bestimmen der Differenz der Ströme der dritten und ersten Phase (W, U),
Erkennen einer Bewegung des Rotors, falls die Differenz einen Schwellenwert überschreitet,

wobei
falls keine Bewegung in Schritt a) und Schritt b) erkannt wurde:
d) Erkennen einer Blockade des Rotors,
falls eine Bewegung sowohl in Schritt a) als auch Schritt b) erkannt wurde:
e) Bestimmen der Stromstärke des erfassten Stroms der bestromten ersten Phase (U) oder der bestromten zweiten Phase (V) zum Bewegungszeitpunkt des Rotors,

Bestimmen des Weiterdrehmoments basierend auf, jeweils zum Bewegungszeitpunkt des Rotors,
der Stromstärke des erfassten Stroms der bestromten ersten Phase (U) oder der bestromten zweiten Phase (V).

## Beschreibung

Die Erfindung betrifft ein Verfahren zum Bestimmen eines Weiterdrehmoments eines mindestens dreiphasigen bürstenlosen Motors gemäß dem Patentanspruch 1, eine entsprechende Ansteuerungsvorrichtung gemäß dem Patentanspruch 6, einen mindestens dreiphasigen bürstenlosen Motor mit einer derartigen Ansteuerungsvorrichtung gemäß dem Patentanspruch 7 sowie ein Haushaltsgerät mit mindestens einem derartigen mindestens dreiphasigen bürstenlosen Motor gemäß dem Patentanspruch 8.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: Brushless direct current motor - kurz: BLDC-Motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Permanenterregte Synchronmotoren besitzen somit eine starre Kopplung der Drehzahl und der Winkellage an die Betriebsfrequenz, weshalb sich permanenterregte Synchronmotoren für Stellantriebe und andere Anwendungen, bei denen eine belastungsunabhängige, stabile Drehzahl gefordert ist, eignen. Permanenterregte Synchronmotoren können ausschließlich mit einem Frequenzumrichter betrieben werden, was sie kostengünstig macht. Auch zeichnen sich permanenterregte Synchronmotoren im Vergleich zu Asynchronmotoren durch wesentlich höhere Wirkungsgrade und ein verbessertes Teillastverhalten aus.

Daher werden permanenterregte Synchronmotoren beispielsweise bei Haushaltsgeräten als Antriebe eingesetzt. Beispielsweise können bei Waschmaschine und Wäschetrocknern die Antriebe der Trommel als permanenterregte Synchronmotoren umgesetzt werden. Dies gilt bei Waschmaschinen ebenso für die Laugenpumpe. Auch andere Pumpen bei anderen Haushaltsgeräten wie beispielsweise für die Umwälzpumpen von Geschirrspülern können von permanenterregten Synchronmotoren angetrieben werden. Ferner können permanenterregte Synchronmotoren bei Lüftern in verschiedenen Haushaltsgeräten als Antriebe verwendet werden. Dies gilt beispielsweise für die Gebläse von Dunstabzugshauben. Ferner können die Bodenbürsten von Staubsaugern von permanenterregten Synchronmotoren angetrieben werden.

Bei derartigen sowie sonstigen Anwendungen von permanenterregten Synchronmotoren können Gleitringdichtungen als dynamische Dichtungen verwendet werden, um eine Abdichtung zwischen der rotierenden Welle und dem umgebenden Gehäuse zu realisieren. Gleitringdichtungen werden von zwei aufeinander gleitenden Ringen, auch Gleitringe genannt, gebildet, welche jeweils auf einem der Dichtungspartner feststehend angeordnet sind und aufeinander reiben. Die aufeinander reibenden Flächen werden üblicherweise aus Kohlenstoff-Graphitwerkstoffen, Metall, Keramik, Kunststoff oder kunstharz-gebundenem Kohlenstoff hergestellt, um den Abrieb zu minimieren, was der Dichtung bzw. der Lebensdauer der Gleitringdichtung zugutekommt. Das Gleitringdichtungssystem einer Geschirrspülerpumpe kann beispielsweise aus einem Keramikring, einem Kohlering und einer Tellerfeder bestehen.

Eine physikalische Größe, um die Dichtigkeit einer Gleitringdichtung zu beurteilen, kann das Weiterdrehmoment sein. Hierunter wird das Drehmoment verstanden, welches bei dem bzw. direkt nach dem Losbrechmoment einsetzt, was somit auch als Losbrechmoment oder Haftmoment verstanden werden kann. Im Falle einer Gleitringdichtung kann somit von dem Weiterdrehmoment bzw. dessen Veränderung auf die aktuelle bzw. verbleibende Dichtigkeit der Gleitringdichtung geschlossen werden. Dies kann sowohl im Laufe der Lebensdauer von Interesse sein als auch bei der Herstellung bzw. bei der Montage der entsprechenden Vorrichtung, welche die Gleitringdichtung aufweist, um im Rahmen der Qualitätskontrolle der Fertigung die Dichtigkeit der Gleitringdichtung zu beurteilen.

Der Erfindung stellt sich das Problem, das Weiterdrehmoment eines permanenterregten Synchronmotors zu erfassen bzw. zu bestimmen. Insbesondere gilt es das Weiterdrehmoment einer Gleitringdichtung von Wellen zu erfassen bzw. zu bestimmen, welche mittels eines permanenterregten Synchronmotors angetrieben werden. Dies soll vorzugsweise ohne zusätzliche Sensorik erfolgen können. Dies soll vorzugsweise im laufenden Betrieb des permanenterregten Synchronmotors bzw. der entsprechenden Vorrichtung, welche die Gleitringdichtung aufweist, erfolgen können. In jedem Fall soll dies vorzugsweise möglichst einfach, bauraumsparend, energiesparend und bzw. oder kostengünstig umgesetzt werden. Zumindest soll eine Alternative zu bekannten derartigen Möglichkeiten geschaffen werden.

Erfindungsgemäß wird dieses Problem durch ein Verfahren mit den Merkmalen des Patentanspruchs 1, durch eine Ansteuerungsvorrichtung mit den Merkmalen des Patentanspruchs 8, durch einen mindestens dreiphasigen bürstenlosen Motor mit den Merkmalen des Patentanspruchs 9 sowie durch ein Haushaltsgerät mit den Merkmalen des Patentanspruchs 10 gelöst. Vorteilhafte Ausgestaltungen und Weiterbildungen der Erfindung ergeben sich aus den nachfolgenden Unteransprüchen.

Somit betrifft die Erfindung ein Verfahren zum Bestimmen eines Weiterdrehmoments eines mindestens dreiphasigen bürstenlosen Motors, vorzugsweise ohne Rotorlagesensor, mit wenigstens den Schritten:
a) geregeltes Bestromen einer ersten Phase, wobei die Phasenspannung des Bestromens vorzugsweise mittels PWM-Steuerung eingestellt wird,
   Bestimmen der Differenz der Ströme der zweiten und dritten Phase,
   Erkennen einer Bewegung des Rotors, falls die Differenz einen Schwellenwert überschreitet,
b) geregeltes Bestromen einer zweiten Phase, wobei die Phasenspannung des Bestromens vorzugsweise mittels PWM-Steuerung eingestellt wird,
   Bestimmen der Differenz der Ströme der dritten und ersten Phase,
   Erkennen einer Bewegung des Rotors, falls die Differenz einen Schwellenwert überschreitet, wobei,

falls keine Bewegung in Schritt a) und Schritt b) erkannt wurde:
   d) Erkennen einer Blockade des Rotors,
falls eine Bewegung sowohl in Schritt a) als auch Schritt b) erkannt wurde:
   e) Bestimmen der Stromstärke des erfassten Stroms der bestromten ersten Phase oder der bestromten zweiten Phase zum Bewegungszeitpunkt des Rotors,

Bestimmen des Weiterdrehmoments basierend auf, jeweils zum Bewegungszeitpunkt des Rotors,
der Stromstärke des erfassten Stroms der bestromten ersten Phase oder der bestromten zweiten Phase.

Ein "Erfassen" ist dabei als ein sensorisches Erfassen einer Größe und ein "Bestimmen" als ein rechnerisches Bestimmen einer Größe zu verstehen.

Der vorliegenden Erfindung liegt dabei die Erkenntnis zugrunde, dass zunächst eine Ausrichtung des Rotors des mindestens dreiphasigen bürstenlosen Motors, d.h. eines permanenterregten Synchronmotors, erfolgen kann. Dies kann durch ein ansteigendes Moment erreicht werden, welches spätestens bei maximaler Amplitude bzw. bei maximalem Moment die Haftreibung überwinden und somit zu einer Bewegung des Rotors führen muss. Andernfalls kann bereits die gewünschte Ausrichtung vorliegen, so dass das bisherige Vorgehen für die zweite Phase wiederholt wird, wie nachfolgend näher beschrieben. Führt auch das Bestromen der zweiten Phase zu keiner Bewegung des Rotors, kann auf eine Blockade des Rotors geschlossen werden, wie nachfolgend näher beschrieben werden wird. Eine Blockade des Rotors kann somit erkannt und darauf, beispielsweise durch eine Unterbrechung des Betriebs des mindestens dreiphasigen bürstenlosen Motors, reagiert werden, um mögliche Schäden zu vermeiden.

Ist die Ausrichtung erfolgt, kann nun die nächste Bewegung des Rotors dafür benutzt werden, durch die Erfassung bzw. durch die Bestimmung der entsprechenden Größen eine Grundlage zu schaffen, um das Weiterdrehmoment bestimmen bzw. berechnen zu können. Somit kann das Weiterdrehmoment als Information vorliegen und weiterverwendet werden, beispielsweise, um auf die Dichtigkeit einer Gleitringdichtung der Welle des mindestens dreiphasigen bürstenlosen Motors zu schließen.

Gemäß einer Ausführungsform umfasst Schritt e):
Bestimmen der Stromstärke des erfassten Stroms der bestromten zweiten Phase zum Bewegungszeitpunkt des Rotors,
Bestimmen des Weiterdrehmoments basierend auf, jeweils zum Bewegungszeitpunkt des Rotors,
der Stromstärke des erfassten Stroms der bestromten zweiten Phase.

Wie bereits erwähnt, kann keine Bewegung des Rotors während der ersten bestromten Phase sowohl eine bereits vorliegende Ausrichtung des Rotors als auch eine Blockade des Rotors als Ursache haben, was sich zunächst nicht unterscheiden lässt. Grundsätzlich ist es daher zwar möglich, das Weiterdrehmoment basierend auf einer erfolgten Bewegung während der Bestromung der ersten Phase zu bestimmen. Um die Zuverlässigkeit und Genauigkeit zu erhöhen, wird jedoch bevorzugt dafür eine erfolgte Bewegung während der Bestromung der zweiten Phase verwendet.

Gemäß einer Ausführungsform umfasst das Verfahren weiter:
c) geregeltes Bestromen einer dritten Phase, wobei die Phasenspannung des Bestromens vorzugsweise mittels PWM-Steuerung eingestellt wird,
Bestimmen der Differenz der Ströme der ersten und zweiten Phase,
Erkennen einer Bewegung des Rotors, falls die Differenz einen Schwellenwert überschreitet,
wobei, falls eine Bewegung in den Schritten b) und c) erkannt wurde, Schritt e) umfasst:
   Bestimmen der Stromstärke des erfassten Stroms der bestromten zweiten und dritten Phase zum Bewegungszeitpunkt des Rotors,
   Bestimmen eines zweiten und dritten Drehmoments basierend auf, jeweils zum Bewegungszeitpunkt des Rotors,
   der Stromstärke des erfassten Stroms der zweiten und dritten bestromten Phase,
   wobei als Weiterdrehmoment der Mittelwert des zweiten und dritten Drehmoments verwendet wird.
   Hierdurch kann die Genauigkeit der Bestimmung des Weiterdrehmoments verbessert werden.

Gemäß einer Ausführungsform umfasst das Verfahren weiter:
c) geregeltes Bestromen einer dritten Phase (W), wobei die Phasenspannung des Bestromens vorzugsweise mittels PWM-Steuerung eingestellt wird,
Bestimmen der Differenz der Ströme der ersten und zweiten Phase,
Erkennen einer Bewegung des Rotors, falls die Differenz einen Schwellenwert überschreitet, wobei, falls eine Bewegung in den Schritten b) und c) erkannt wurde, Schritt e) umfasst:
   Bestimmen der Stromstärke des erfassten Stroms der bestromten zweiten und dritten Phase zum Bewegungszeitpunkt des Rotors,
   Bestimmen eines zweiten und dritten Drehmoments basierend auf, jeweils zum Bewegungszeitpunkt des Rotors,
   der Stromstärke des erfassten Stroms der zweiten und dritten bestromten Phase,
   wobei als Weiterdrehmoment der Mittelwert des zweiten und dritten Drehmoments verwendet wird.

Hierdurch kann die Genauigkeit der Bestimmung des Weiterdrehmoments ggf. weiter verbessert werden.

Bevorzugt wird das Verfahren aus dem Stillstand des Motors heraus ausgeführt.

Bevorzugt erfolgt das geregelte Bestromen in den Schritten a), b) und c) in Form einer stetig ansteigenden Stromrampe.

Bevorzugt beträgt der Schwellenwert in den Schritten a), b) und c) 10%, bevorzugt 5% des Strommaximalwerts des Motors.

Die vorliegende Erfindung betrifft auch eine Ansteuerungsvorrichtung zum Bestimmen eines Weiterdrehmoments eines mindestens dreiphasigen bürstenlosen Motors, vorzugsweise ohne Rotorlagesensor, wie zuvor beschrieben. Hierdurch kann eine Ansteuerungsvorrichtung geschaffen werden, um das erfindungsgemäße Verfahren umzusetzen.

Die vorliegende Erfindung betrifft auch einen mindestens dreiphasigen bürstenlosen Motor, vorzugsweise ohne Rotorlagesensor, mit einer Ansteuerungsvorrichtung wie zuvor beschrieben. Hierdurch kann ein mindestens dreiphasiger bürstenloser Motor bereitgestellt werden, um die zuvor beschriebenen Aspekte der Erfindung bzw. um das erfindungsgemäße zuvor beschriebene Verfahren umzusetzen.

Die vorliegende Erfindung betrifft auch ein Haushaltsgerät mit mindestens einem mindestens dreiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Die Erfindung kann natürlich auch bei Motoren mit mehr als 3 Phasen angewendet werden, wobei dann das erfindungsgemäße Verfahren entsprechend auf eine bestromte und zwei unbestromte der mehr als 3 Phasen angewendet wird.

Der vorliegenden Erfindung liegt dabei die Erkenntnis zugrunde, dass es zu einer Unstetigkeit im Stromverlauf kommt, falls sich bei der Ansteuerung des permanenterregten Synchronmotors der Rotor bewegt. Die EMK induziert dann Spannungen in die Motorwicklungen, welche als Störgröße auf die Klemmenspannung des permanenterregten Synchronmotors wirken.

Wird z.B. der Strom in einer Phase U geregelt, fließt unter Annahme gleicher Wicklungswiderstände in den anderen beiden Phasen V, W jeweils der halbe Strom. Die absolute Differenz der Phasenströme der beiden ungeregelten Phasen V, W ist somit ungefähr Null. Kommt es nun zu einer Bewegung des Rotors, ist die Differenz der Phasenströme deutlich größer Null. Dies ermöglicht die Erkennung des Bewegungszeitpunktes.

Die zu diesem Zeitpunkt eingestellte Stromstärke in der geregelten Phase U kann erfasst werden. Aus der Stromstärke kann das Weiterdrehmoment berechnet werden.

Ist der Rotor des permanenterregten Synchronmotors vollständig blockiert, so entsteht keine Unstetigkeit. Auch dies kann erkannt werden.

Ein Ausführungsbeispiel der Erfindung ist in den Zeichnungen rein schematisch dargestellt und wird nachfolgend näher beschrieben. Es zeigt
- Figur 1: eine Schaltung eines bekannten bürstenlosen Motors; und
- Figur 2: einen Verlauf der Motorphasenströme während einer Weiterdrehmoment-Messung.

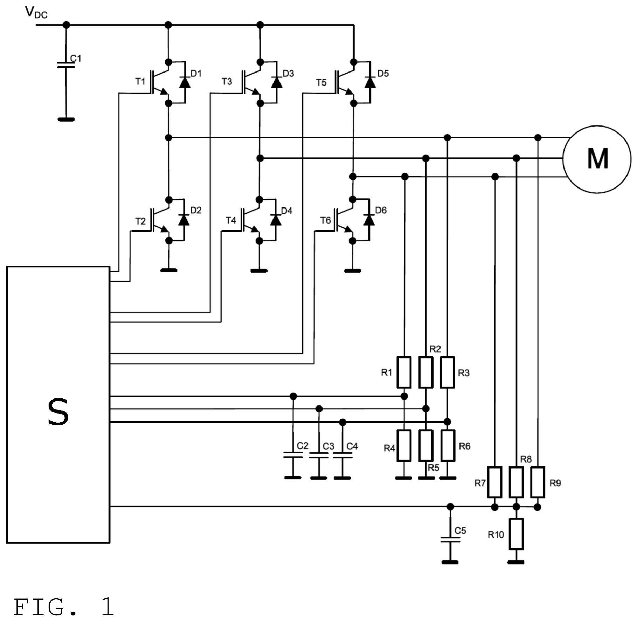

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Schaltelementen (MOSFETs oder Transistoren) T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

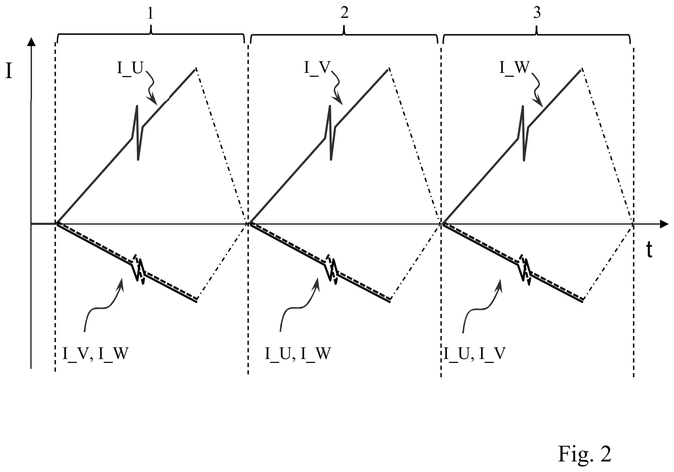

Figur 2 zeigt eine schematische Oszilloskop-Darstellung der Motorphasenströme während einer Weiterdrehmoment-Messung, d.h. den zeitlichen Verlauf der Motorströme bzw. Strangströme I_U, I_V und I_W.

Hierzu lässt sich ein erfindungsgemäßes Verfahren zum Bestimmen eines Weiterdrehmoments des dreiphasigen bürstenlosen Motors M wie folgt verwenden:
Es erfolgt ein geregeltes Bestromen einer ersten Phase U, wobei die Phasenspannung U_{PhaseU} des Bestromens vorzugsweise mittels PWM-Steuerung eingestellt wird. Somit wird der Strom einer Phase U bzw. eines Stranges über einen Stromregler rampenförmig eingeregelt. Im ersten Abschnitt des zeitlichen Verlaufs der Figur 2 wird der Strom I_U mit einem rampenförmigen Verlauf geregelt. Anschließend erfolgt dies in den Abschnitten 2 und 3 des zeitlichen Verlaufs der Figur 2 gleichermaßen für die Ströme I_V und I_W.

Dabei erfolgt ein Erfassen der Ströme I_V und I_W der beiden unbestromten Phasen V, W und ein Bestimmen der Differenz der Ströme der beiden unbestromten Phasen V, W. Für den Fall, dass die ermittelte Differenz der Ströme I_V und I_W der beiden unbestromten Phasen V, W ungleich Null bzw. deren Verlauf nicht identisch ist (hier durch die verschiedenen gestrichelt bzw. durchgezogen gezeichneten Verläufe dargestellt), führt dies zu einem Erkennen einer erfolgten Ausrichtung des Rotors während der Bestromung der ersten Phase U bzw. in Abschnitt 1.

Optional kann die Phase U bzw. der Abschnitt 1 als initiale Ausrichtungsphase genutzt und für die Bestimmung des Weiterdrehmoments verworfen werden.

Ein Statorstrom mit definiertem räumlichem Winkel, also ein Statorstrom-Raumzeiger, erzeugt ein gerichtetes Magnetfeld, welches den Permanentmagnet-Rotor ausrichtet. Hier nimmt über die Stromrampe die Amplitude des Stromraumzeigers und damit die Amplitude des resultierenden Fluss-Raumzeigers stetig zu, was zu einem stetig steigenden Drehmoment führt. Spätestens mit Erreichen der maximalen Amplitude sollte der Rotor sich durch entsprechende Drehung bewegt haben.

Da der Motor in Stern geschaltet ist, fließt in jedem Abschnitt der Strom in der geregelten Phase immer zu gleichen Anteilen in den ungeregelten Phasen ab. Dies verdeutlichen die jeweils negativ verlaufenden Stromkurven. In Abschnitt 1 sind das die Ströme I_V und I_W. Diese Ströme weisen, sobald es zu einer Drehung des Rotors kommt, was wiederum aufgrund der EMK das Induzieren einer Spannung in den Stator zur Folge hat, unstetige Stellen im zeitlichen Verlauf auf. Dies ist etwa in der Mitte der ansteigenden Stromrampe im Abschnitt 1 zu erkennen.

Bei erkannter Ausrichtung des Rotors während der Bestromung der ersten Phase U erfolgt dann ein geregeltes Bestromen einer zweiten Phase V, wobei die Phasenspannung U_{PhaseV} des Bestromens vorzugsweise mittels PWM-Steuerung eingestellt wird. In Abschnitt 2 wird analog mit Phase V weiter verfahren. Es erfolgt ein Erfassen der Ströme I_U und I_W der beiden unbestromten Phasen U, W und ein Bestimmen der Differenz der Ströme der beiden unbestromten Phasen U, W. Für den Fall, dass die ermittelte Differenz der Ströme der beiden unbestromten Phasen U, W ungleich Null ist, erfolgt ein Bestimmen des Zeitpunkts des Eintretens der ermittelten Differenz als Bewegungszeitpunkt des Rotors.

Bei erkannter Ausrichtung des Rotors während der Bestromung der zweiten Phase V erfolgt dann ein geregeltes Bestromen einer dritten Phase W, wobei die Phasenspannung U_{PhaseW} des Bestromens vorzugsweise mittels PWM-Steuerung eingestellt wird. In Abschnitt 3 wird analog mit Phase W weiter verfahren. Es erfolgt ein Erfassen der Ströme I_U und I_V der beiden unbestromten Phasen U, V und ein Bestimmen der Differenz der Ströme der beiden unbestromten Phasen U, V. Für den Fall, dass die ermittelte Differenz der Ströme der beiden unbestromten Phasen U, V ungleich Null ist, erfolgt ein Bestimmen des Zeitpunkts des Eintretens der ermittelten Differenz als Bewegungszeitpunkt des Rotors.

Somit erfolgt im zweiten und dritten Abschnitt ein Ermitteln des Drehmoments, wenn (optional) der erste Abschnitt hierbei nicht verwendet wird, wie vorstehend erwähnt. Hierzu werden erneut rampenförmig ansteigende Ströme eingeprägt, aber mit verschiedenen räumlichen Winkeln. Die bekannten Stromraumzeiger, welche bei einem 3-strängigen Motor M in der Regel eine Lage von 120° zueinander aufweisen, erzeugen über die Stromamplitude und die Phasenlage definierbare Drehmomente, die auf den Rotor einwirken.

Zieht man nun die Amplitude des geregelten Stroms zu genau den Zeitpunkten der Unstetigkeit in den ungeregelten Strömen heran, kann über die bekannte Phasenlage das Haftmoment des Motors M ermittelt werden.

Die Messung des Haftmoments erfolgt, indem man ermittelt, welcher Wert des Stroms in der momentbildenden Richtung (q-Strom) notwendig ist, um den Rotor zu bewegen. Prinzipiell ist es so, dass, wenn im Stillstand ein elektrisches Moment erzeugt wird, das kleiner als die Haftreibung ist, keine Bewegung des Rotors stattfindet. Ist das elektrische Moment grösser als die Haftreibung, so findet eine Rotation des Rotors statt.

Grundsätzlich sollte diese Erfassung und die zugehörige Auswertung "schnell genug" erfolgen, da die Zuordnung zwischen dem momentanen Strangstrom (Drehmomentbildenden Stromkomponente Isq) und dem Erkennungszeitpunkt der Drehbewegung von entscheidender Wichtigkeit für die Genauigkeit des Messwertes ist. Die Amplitude des drehmomentbildenden Statorstroms Isq, exakt zum Zeitpunkt der erkannten Drehbewegung (Unstetigkeit in den Strömen), stellt ein Maß für das Weiterdrehmoment dar.

Die drehmomentbildende Stromkomponente Isq lässt sich aus der bekannten Rotorlage berechnen. Da die Bestromung in den Abschnitten um jeweils 120°el voneinander abweicht, ergibt sich ein Isq = Is * sin(120°).

Das Drehmoment wird anschließend über die Momentenkonstante der Maschine (Flussverkettung) ermittelt. Dieser Faktor gibt an, wie hoch das maximale Drehmoment bei rein Drehmoment-bildender Stromkomponente ist.

In den Abschnitten 2 und 3 wird von der Software die Stromamplitude der geregelten Phasen erfasst und daraus ein Haftreibmoment ermittelt. Dieser Messwert steht anschließend zur Verfügung, kann abgespeichert oder an eine übergeordnete Steuerung weitergeleitet werden.

Die maximalen Amplituden und die Gradienten der Ströme können vorher spezifisch für die Anwendung festgelegt werden. Randbedingungen sind hierfür beispielsweise die Maximalmomente oder die Maximalströme der Elektronik/des Motors.

Es gibt Sonderfälle, die mit diesem Verfahren ebenfalls abgedeckt werden können:
1. Kommt es im Abschnitt 1 zu keiner Unstetigkeit im Strom, hat folglich keine Drehbewegung des Rotors stattgefunden oder der Rotor war bereits in korrekter Position vorausgerichtet. Der Messwert im folgenden Abschnitt wird verworfen, da anzunehmen ist, dass erst in Abschnitt 2 die Vorausrichtung erfolgte. Der hohe Messwert in der mittleren Messung (2. Messung) blieb daher unberücksichtigt, siehe Abbildung 2.
2. Kommt es im Abschnitt 1 zu keiner Unstetigkeit im Strom, hat folglich keine Drehbewegung des Rotors stattgefunden oder der Rotor war bereits in korrekter Position vorausgerichtet. Kommt es danach auch in den Abschnitten 2 und 3 zu keiner Unstetigkeit im Strom, es hat folglich weiterhin auch keine Drehbewegung stattgefunden, so wird der Status der Weiterdrehmomentmessung auf "Blockierter Rotor" gesetzt.

### Bezugszeichenliste (Bestandteil der Beschreibung)

- C1-C5: Kondensatoren
- D1-D6: Dioden der B6-Brücke
- T1-T6: Transistoren der B6-Brücke
- R1-R10: ohmsche Widerstände
- V_{DC}: Gleichspannung

- U: Phase U
- V: Phase V
- W: Phase W

- t₁-t₆: Nulldurchgänge der Sektoren; Messzeitpunkte
- U_{PhaseU/V/W}: Phasenspannung; Zwischenkreisspannung

- M: (mindestens dreiphasiger) bürstenloser Motor; BLDC-Motor
- S: Steuerungseinheit; Rechner; geregelter Frequenzumrichter

## Patentansprüche

1. Verfahren zum Bestimmen eines Weiterdrehmoments eines mindestens dreiphasigen bürstenlosen Motors (M), vorzugsweise ohne Rotorlagesensor, mit wenigstens den Schritten:
a) geregeltes Bestromen einer ersten Phase (U), wobei die Phasenspannung (U_PhaseU) des Bestromens vorzugsweise mittels PWM-Steuerung eingestellt wird,
Bestimmen der Differenz der Ströme der zweiten und dritten Phase (V, W),
Erkennen einer Bewegung des Rotors, falls die Differenz einen Schwellenwert überschreitet,
b) geregeltes Bestromen einer zweiten Phase (V), wobei die Phasenspannung (U_PhaseV) des Bestromens vorzugsweise mittels PWM-Steuerung eingestellt wird,
Bestimmen der Differenz der Ströme der dritten und ersten Phase (W, U),
Erkennen einer Bewegung des Rotors, falls die Differenz einen Schwellenwert überschreitet,
wobei
falls keine Bewegung in Schritt a) und Schritt b) erkannt wurde:
d) Erkennen einer Blockade des Rotors,
falls eine Bewegung sowohl in Schritt a) als auch Schritt b) erkannt wurde:
e) Bestimmen der Stromstärke des erfassten Stroms der bestromten ersten Phase (U) oder der bestromten zweiten Phase (V) zum Bewegungszeitpunkt des Rotors,
Bestimmen des Weiterdrehmoments basierend auf, jeweils zum Bewegungszeitpunkt des Rotors,
der Stromstärke des erfassten Stroms der bestromten ersten Phase (U) oder der bestromten zweiten Phase (V).

2. Verfahren nach Anspruch 1, wobei Schritt e) umfasst:
Bestimmen der Stromstärke des erfassten Stroms der bestromten zweiten Phase (V) zum Bewegungszeitpunkt des Rotors,
Bestimmen des Weiterdrehmoments basierend auf, jeweils zum Bewegungszeitpunkt des Rotors,
der Stromstärke des erfassten Stroms der bestromten zweiten Phase (V).

3. Verfahren nach Anspruch 2, weiter umfassend:
c) geregeltes Bestromen einer dritten Phase (W), wobei die Phasenspannung (U_PhaseW) des Bestromens vorzugsweise mittels PWM-Steuerung eingestellt wird,
Bestimmen der Differenz der Ströme der ersten und zweiten Phase (U, V),
Erkennen einer Bewegung des Rotors, falls die Differenz einen Schwellenwert überschreitet,
wobei, falls eine Bewegung in den Schritten b) und c) erkannt wurde, Schritt e) umfasst:
Bestimmen der Stromstärke des erfassten Stroms der bestromten zweiten und dritten Phase (V, W) zum Bewegungszeitpunkt des Rotors,
Bestimmen eines zweiten und dritten Drehmoments basierend auf, jeweils zum Bewegungszeitpunkt des Rotors,
der Stromstärke des erfassten Stroms der zweiten und dritten bestromten Phase (V, W),
wobei als Weiterdrehmoment der Mittelwert des zweiten und dritten Drehmoments verwendet wird.

4. Verfahren nach Anspruch 1, weiter umfassend:
c) geregeltes Bestromen einer dritten Phase (W), wobei die Phasenspannung (U_PhaseW) des Bestromens vorzugsweise mittels PWM-Steuerung eingestellt wird,
Bestimmen der Differenz der Ströme der ersten und zweiten Phase (U, V),
Erkennen einer Bewegung des Rotors, falls die Differenz einen Schwellenwert überschreitet,
wobei, falls eine Bewegung in den Schritten a), b) und c) erkannt wurde, Schritt e) umfasst:
Bestimmen der Stromstärke des erfassten Stroms der bestromten ersten, zweiten und dritten Phase (U, V, W) zum Bewegungszeitpunkt des Rotors,
Bestimmen eines ersten, zweiten und dritten Drehmoments basierend auf, jeweils zum Bewegungszeitpunkt des Rotors,
der Stromstärke des erfassten Stroms der ersten, zweiten und dritten bestromten Phase (U, V, W),
wobei als Weiterdrehmoment der Mittelwert des ersten, zweiten und dritten Drehmoments verwendet wird.

5. Verfahren nach einem der vorhergehenden Ansprüche, wobei das Verfahren aus dem Stillstand des Motors (M) heraus ausgeführt wird.

6. Verfahren nach einem der vorhergehenden Ansprüche, wobei das geregelte Bestromen in den Schritten a), b) und c) in Form einer stetig ansteigenden Stromrampe erfolgt.

7. Verfahren nach einem der vorhergehenden Ansprüche, wobei der Schwellenwert in den Schritten a), b) und c) 10%, bevorzugt 5% des Strommaximalwerts des Motors (M) beträgt.

8. Ansteuerungsvorrichtung, die eingerichtet ist zum Bestimmen eines Weiterdrehmoments eines mindestens dreiphasigen bürstenlosen Motors (M), vorzugsweise ohne Rotorlagesensor, gemäß einem Verfahren nach einem der vorangehenden Ansprüche.

9. Mindestens dreiphasiger bürstenloser Motor (M), vorzugsweise ohne Rotorlagesensor, mit einer Ansteuerungsvorrichtung nach Anspruch 8.

10. Haushaltsgerät mit mindestens einem mindestens dreiphasigen bürstenlosen Motor (M) nach Anspruch 9.
